Europäisches Patentamt

European Patent Office

Office européen des brevets

(19)

(11) Veröffentlichungsnummer: **0 257 550**
**A2**

## (12) EUROPÄISCHE PATENTANMELDUNG

(21) Anmeldenummer: **87112047.3**

(22) Anmeldetag: **19.08.87**

(51) Int. Cl.⁴: **G06K 9/46**

(30) Priorität: **27.08.86 DE 3629012**

(43) Veröffentlichungstag der Anmeldung:
**02.03.88 Patentblatt  88/09**

(84) Benannte Vertragsstaaten:
**AT DE FR GB IT**

(71) Anmelder: **Siemens Aktiengesellschaft Berlin und München**
**Wittelsbacherplatz 2**
**D-8000 München 2(DE)**

(72) Erfinder: **Scherl, Wolfgang, Dr.**
**Kafkastrasse 54**
**D-8000 München 83(DE)**
Erfinder: **Lippmann, Carsten**
**Cäsar-von-Hofacker-Strasse 9**
**D-8132 Tutzing(DE)**

(54) **Bildgraph zur symbolischen Darstellung von Schwarz/Weiss-Bildern auf der Basis flächenhafter Primitivelemente und Verfahren zur Extraktion solcher Primitivelemente und zum Aufbau des Bildgraphen.**

(57) Ein spezieller Bildgraph, der die symbolische Darstellung der Ränder, der Skelette wie auch der Flächen der zu analysierenden Muster und ihrer Zwischenräume umfaßt. Die hierzu erforderlichen drei Darstellungsarten sind eng miteinander verknüpft. Dies erlaubt die gleichzeitige Analyse des Musters in mehreren Darstellungsarten bzw. einen Wechsel der Darstellungsart während der Analyse. Hierdurch können die Vorteile jeder Darstellungsart ausgenutzt werden. Der Bildgraph gliedert sich in anwendungsabhängige und anwendungsunabhängige Darstellungs-oder Beschreibungsebenen. Die hierarchische Organisation des Bildgraphen gibt den Bildinhalt in unterschiedlichen Genauigkeitsstufen wieder. In einer der Beschreibungsebenen werden Deskriptoren (D) mit jeweils lokal benachbarten Deskriptoren (D) desselben Randes (B) bzw. anderer Ränder (B) über eine Grobfläche (F) miteinander verbunden.

FIG4

**Bildgraph zur symbolischen Darstellung von Schwarz/Weiß-Bildern auf der Basis flächenhafter Primitivelemente und Verfahren zur Extraktion solcher Primitivelemente und zum Aufbau des Bildgraphen**

Die vorliegende Erfindung betrifft einen Bildgraphen zur symbolischen Darstellung von Schwarz/Weiß-Bildern auf der Basis flächenhafter Primitivelemente und ein Verfahren zur Extraktion solcher Primitivelemente und des Bildgraphen.

Für eine rechnergestützte Erkennung und Analyse von Schwarz/Weiß-Bildern, vorzugsweise Dokumenten, die von ihrer Informationsstruktur hinsichtlich der Musterrandverläufe innerhalb solcher Schwarz/Weiß-Bilder hochkomplex sein können, ist ein syntaktisches Erkennungssystem, das sicher und effizient arbeitet, erforderlich.

Zur Analyse derartiger Schwarz/Weiß-Bilder wurden bisher syntaktische Verfahren verwendet, denen allein das Skelett oder der Randverlauf der in derartigen Bildern enthaltenen Muster oder Symbole zugrundeliegt.

Aus der deutschen Patentanmeldung P 35 348 973.9 ist bereits ein Verfahren zur einheitlichen symbolischen Beschreibung von Dokumentmustern in Form von Datenstrukturen bekannt, bei dem in einem Feinstrukturelement-Modul Feinstrukturelemente gebildet werden, die zu Feinrandketten zusammengefaßt werden, welche die Randverläufe der einzelnen Muster pixelgenau wiedergeben.

Die Feinrandketten werden zusammen mit der Grobbeschreibungsform durch Deskriptor-Polygone verarbeitet.

Ein derartiges Bildbeschreibungs-Verfahren rein auf der Basis von Musterrändern gibt einem syntaktischen Erkennungsverfahren noch nicht die Möglichkeit, verschiedenartige Störungsfälle und Musterkombinationen effektiv und störsicher zu bearbeiten.

Die gegebene Erkennungsleistung und -sicherheit bei bekannten Verfahren der genannten Art sollte wesentlich erhöht werden.

Der vorliegenden Erfindung liegt daher die Aufgabe zugrunde, einen Bildgraphen und ein Verfahren der eingangs genannten Art zur Erkennung und Analyse hochkomplexer Schwarz/Weiß-Bilder zu schaffen, welches Verfahren leistungsfähiger als die bekannten Verfahren ist und ein größeres Maß an Störsicherheit aufweist.

Zur Lösung dieser Aufgabe wird ein Bildgraph zur symbolischen Darstellung von Schwarz/Weiß-Bildern, mit Feinstrukturketten, bestehend aus Feinstrukturelementen und deren Verkettung gemäß dem Randverlauf des betreffenden Musters zum 'Zwecke einer exakten Musterbeschreibung in einer ersten Beschreibungsebene, Deskriptorketten, bestehend aus Deskriptoren und deren Verkettung gemäß dem Randverlauf des betreffenden Musters zum Zwecke einer vergröberten Musterbeschreibung in einer zweiten Beschreibungsebene, Angaben über Beziehungen zwischen diesen beiden Beschreibungsebenen und Repräsentanten für Außen-und Innenränder, Objekte und Worte sowie deren Beziehungen untereinander vorgeschlagen, der durch die in dem kennzeichnenden Teil des Patentanspruchs 1 angegebenen Merkmale gekennzeichnet ist. Außerdem wird zur Lösung der genannten Aufgabe ein Verfahren zum Erzeugen, Einpassen und symbolischen Repräsentieren von geometrischen Figuren in Schwarz-bzw. Weißbereichen synchron mit einem zeilenweisen Abtasten eines Schwarz/Weiß-Bildes, dem symbolischen Repräsentieren dieser Figuren und dem Verzeigern dieser Repräsentanten mit Feinstrukturelementen der von der Figuren jeweils berührten Ränder und dadurch zum symbolischen Darstellen von Nachbarschaftsbeziehungen und flächenmäßigen Gegebenheiten in dem Schwarz/Weißbild, zur Bildung von Bildgraphen vorgeschlagen, das durch die in dem kennzeichnenden Teil des Patentanspruchs 3 angegebenen Merkmale gekennzeichnet ist.

Vorteilhafte Weiterbildungen der Erfindung sind durch die in den übrigen Patentansprüchen angegebenen Merkmale gekennzeichnet.

Kern der Aufgabenlösung ist ein spezieller Bildgraph, der die symbolische Darstellung der Ränder, der Skelette wie auch der Flächen der zu analysierenden Muster und ihrer Zwischenräume umfaßt. Die hierzu erfoderlichen drei Darstellungsarten still eng miteinander verknüpft. Dies erlaubt die gleichzeitige Analyse des Musters in mehreren Darstellungsarten bzw. einen Wechsel der Darstellungsart während der Analyse. Hierdurch können die Vorteile jeder Darstellungsart ausgenutzt werden. Der Bildgraph gliedert sich in anwendungsabhängige und anwendungsunabhängige Darstellungs-oder Beschreibungsebenen. Die hierarchische Organsiation des Bildgraphen gibt den Bildinhalt in unterschiedlichen Genauigkeitsstufen wieder.

Im folgenden wird die Erfindung anhand mehrerer Figuren im einzelnen beschrieben.

Fig. 1 zeigt ein Textmuster als Schwarz/Weiß-Bild.

Fig. 2 zeigt die aus dem Textmuster gemäß Fig. 1 extrahierten Musterränder, die in einem Automaten zur Durchführung des erfindungsgemäßen Verfahrens in Form von Deskriptor-Polygonen abgelegt sind, wie dies bereits bekannt ist. Diese Polygone sind bereits Teil des zu erzeugenden Bildgraphen.

Fig. 3 visualisiert zwischen die Musterränder eingepaßte Grobflächen F der zweiten Beschreibungsebene.

Fig. 4 zeigt anhand eines Ausschnitts aus Fig. 3 die sich ergebenden Beziehungen der einzelnen Grobflächen F, die Musterränder B und die Deskriptoren D, mittels derer eine betrachtete Grobfläche F1 "aufgespannt" wird.

Fig. 5 zeigt symbolische Repräsentanten FR der Grobflächen F gemäß Fig. 4, welche Repräsentanten durch Zeiger Z zu einem Netz vermascht sind, wobei die Zeiger Z die Nachbarschaftsbeziehungen zwischen den einzelnen Grobflächen F wiedergeben und wobei Zeiger, die mit einem Querstrich versehen sind, solche Zeiger sind, die Nachbarschaftsbeziehungen über einen Musterrand hinweg kennzeichnen.

Fig. 6 zeigt die Nachbarschaften des Flächenrepräsentanten FR1 der Fläche F1 in Fig. 4, wobei die Zeiger Z, die die Nachbarschaftsbeziehungen kennzeichnen, in Form einer Kette an dem Flächenrepräsentanten FR1 hängen. Diese Figur gibt genauere Einzelheiten betreffend den Repräsentanten FR1 in Fig. 5 und dessen Verzeigerung mit den Nachbarflächen wieder. Die Zeiger Z gliedern sich hierbei in Zeiger ZF (direkt Nachbarschaften zwischen Flächen, z. B. FR 1 u. FR5) und ZD (Nachbarschaften zwischen Flächen über den Deskriptor D eines Musterrandes hinweg).

Fig. 7 zeigt zwischen Musterränder eingepaßte Quadrate mit drei (Q1) bzw. zwei (Q2) Berührstellen, wobei Quadrate Q3 u. Q4 erst einen einzigen Musterrand berühren und noch an der Abtastzeile anliegen, also noch im Wachsen begriffen sind.

Fig. 8 zeigt die möglichen Wachstumsrichtungen eines Quadrats, die Wachstumsrichtungen der Quadratkanten in den acht möglichen Fällen, wobei die Anfangs-Wachstumsrichtungen besonders markiert sind.

Fig. 9 zeigt alle möglichen Qudarat-Wachstumsrichtungen in vektorieller Darstellung.

Fig. 10 zeigt eine symbolische Darstellung des Anfangs-Wachstums eines Quadrats Q von einem Feinstrukturelement FS aus, und zwar eines Wachstums gemäß dem in Fig. 8 gezeigten Fall 8.

Fig. 11 zeigt eine symbolische Darstellung einer Änderung der Wachstumsrichtung des Quadrats Q bei Erreichen eines Musterrandes B2.

Fig. 12 zeigt Musterränder B1 ... B3 eines Bildmusters (12a) und daraus die Anzeige einer Projektionszeile PZA für Abstände (12b) und einer Projektionszeile PZL für Speicherindizes (12c) sowie Verknüpfungen zwischen den Speicherindizes und den Musterrändern, die in dem Speicher des durchführenden Rechenautomaten in Form von Polygonzügen gespeichert sind (12d). Diese Figur zeigt auch den Repräsentanten eines Quadrats Q und dessen Verzeigerung mit Feinstrukturelementen der Ränder B1 u. B2.

Fig. 13 verdeutlicht Beurteilungskriterien, nach denen eine Grobfläche eines Typs 5 bzw. eines Typs 6 mit einer Grobfläche eines Typs 1 bzw. eines Typs 3 vereinigt wird.

Der erfindungsgemäße Bildgraph zur symbolischen Darstellung von Schwarz/Weiß-Bildern enthält Feinstrukturketten, die aus Feinstrukturelementen und deren Verkettung gemäß dem Randverlauf des betreffenden Musters zum Zwecke einer exakten Musterbeschreibung in einer ersten Beschreibungsebene bestehen, Deskriptorketten, die aus Deskriptoren und deren Verkettung gemäß dem Randverlauf des betreffenden Musters zum Zwecke einer vergröberten Musterbeschreibung in einer zweiten Beschreibungsebene bestehen, Angaben über Beziehungen zwischen diesen beiden Beschreibungsebenen und Repräsentanten für Außen-und Innenränder, Objekte undWorte sowie deren Beziehungen untereinander.

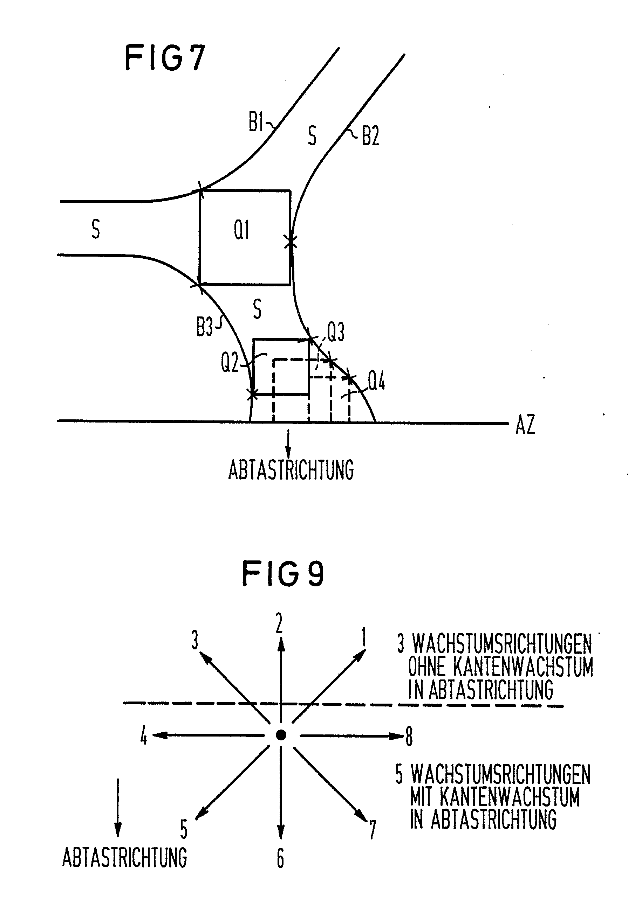

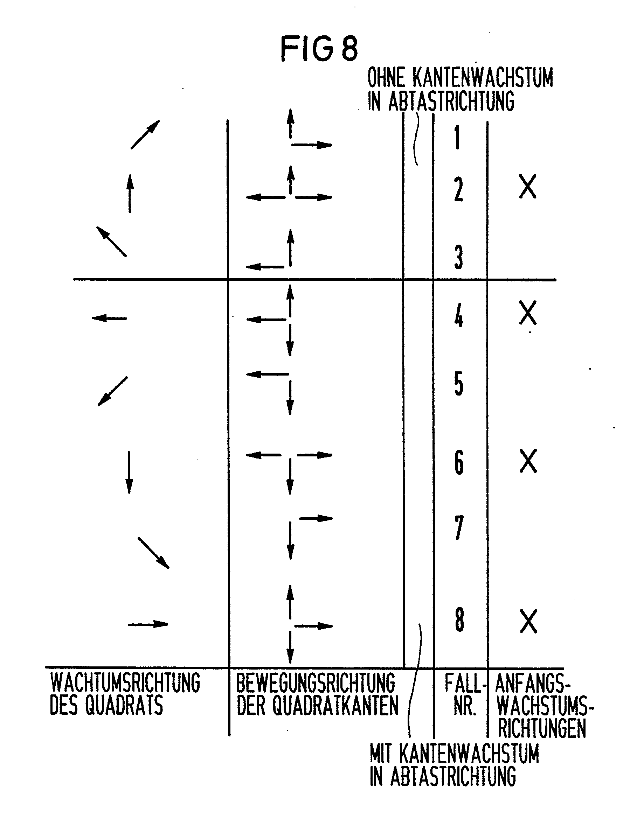

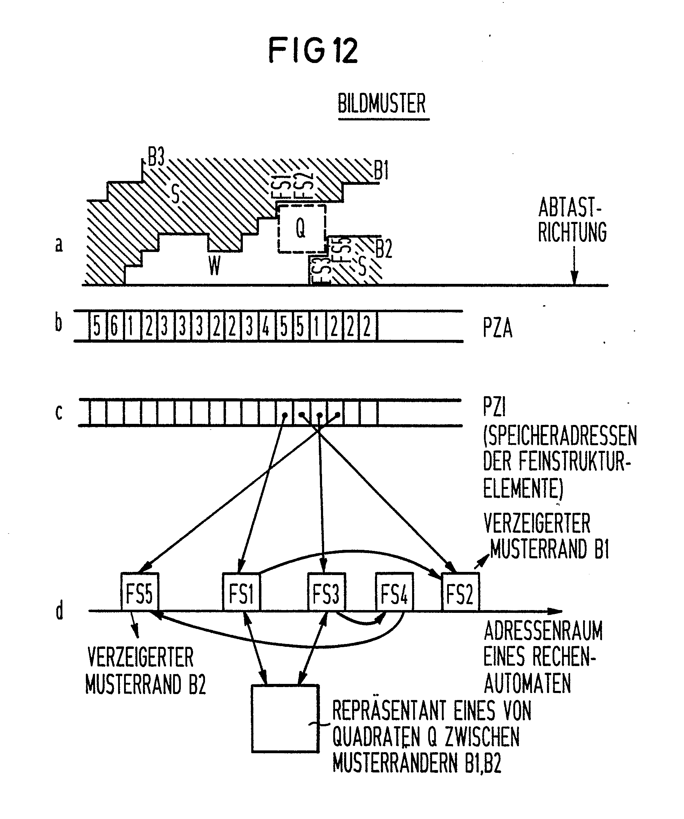

In der ersten Beschreibungsebene ist jedes Feinstrukturelement FS, vergl. Fig. 7 u. Fig. 12d, mit lokal benachbarten Feinstrukturelementen FS desselben Randes bzw. anderer Ränder über eine Flächenbeziehung verbunden. Diese Flächenbeziehung ist gemäß den Eigenschaften einer zwischen den betreffenden Rändern B1, B2, B3, vergl. Fig. 7, eingepaßten geometrischen Figur Q dargestellt. Die Flächenbeziehung ist durch einen symbolischen Repräsentanten in Form einer Datenstruktur repräsentiert. Diese Datenstruktur ist durch Zeiger mit all den Feinstrukturelementen FS. vergl. Fig. 7 u. Fig. 12d, verbunden, die die geometrische Figur an den angrenzenden Rändern berühren. Derartige geometrische Figuren Q werden sowohl in Weißbereichen W als auch in Schwarzbereichen S extrahiert. Von jedem Feinstrukturelement FS ist je ein Zeiger auf den symbolischen Repräsentanten der berührenden geometrischen Figur Q des Weißbereichs W und des Schwarzbereichs S eingetragen. Die Repräsentanten benachbarter geometrischer Figuren Q in dem Schwarzbereich S bzw. in dem Weißbereich W sind derart untereinander verzeigert, daß sich ein Musterskelett des Weißbereichs W bzw. des Schwarzbereichs S in vektorisierter Form ergibt.

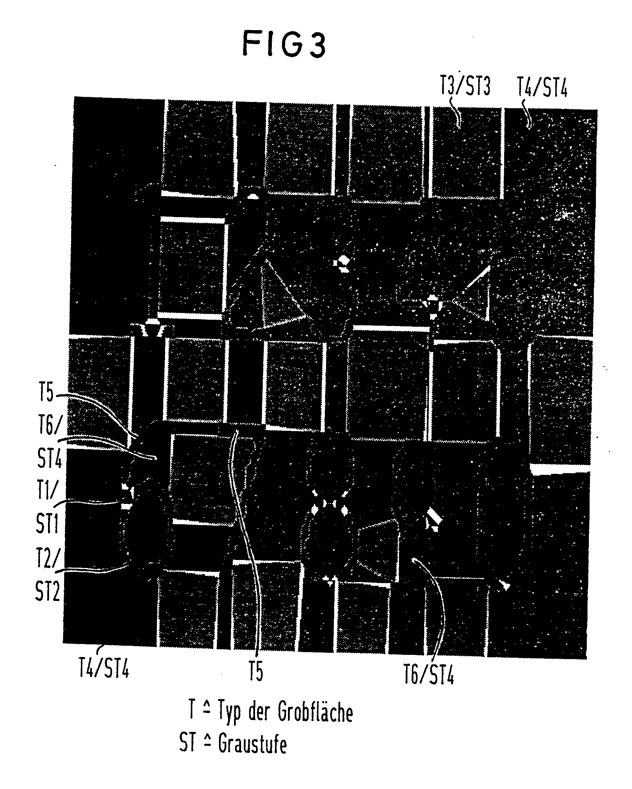

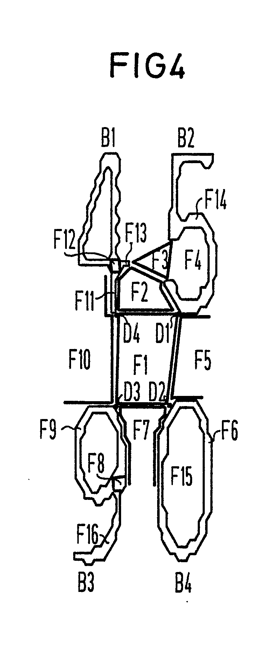

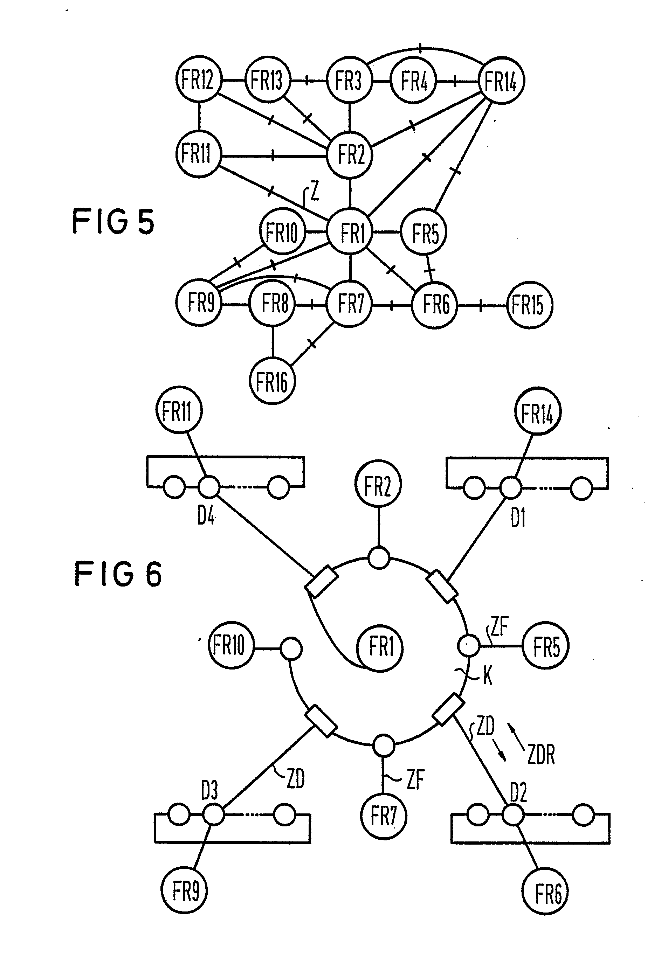

In der zweiten Beschreibungsebene ist jeder Deskriptor D mit lokal benachbarten Deskriptoren D desselben Randes B bzw. anderer Ränder B über eine entsprechende Grobfläche F, vergl. Fig. 3 u. Fig. 4, verbunden. Diese Grobfläche F ist gemäß den Eigenschaften eines von einem Betrachter als ganzheitlich empfundenen Bereichs dargestellt. Die Grobfläche F ist durch einen symbolischen Repräsentanten in Form einer Datenstruktur repräsentiert. Diese Datenstruktur ist durch Zeiger Z ist mit all den Deskriptoren D der angrenzenden Ränder verbunden, die den von dem Betrachter empfundenen Bereich berühren, vergl. Fig. 4 u. Fig. 6). Die genannten Grobflächen F werden sowohl in Weißbereichen W als auch in Schwarzbereichen S extrahiert.Von jedem Deskriptor D ist ein Rückzeiger ZDR, vergl. Fig. 6, auf den Repräsentanten der berührenden Grobfläche F sowohl des angrenzenden Weißbereichs W als auch des angrenzenden Schwarzbereichs S eingetragen. Die Repräsentanten benachbarter Grobflächen F in dem Schwarzbereich S bzw. in dem Weißbereich W sind untereinander durch Zeiger ZF, vergl. Fig. 6, verzeigert. Daraus ergibt sich ein Grobskelett des Weißbereichs W bzw. des Schwarzbereichs S.

Für den erfindungsgemäßen Bildgraphen sind im Regelfall vier Typen T1 ... T4, vergl. Fig. 3, von Grobflächen vorgesehen, wobei dem Schwarzbereich und dem Weißbereich jeweils zwei Grundtypen zugeordnet sind. Ein erster Typ T1 bzw. ein dritter Typ T3 von Grobfläche stellt eine schwarze bzw. eine weiße Knotenfläche dar, der zumindest drei Flächen gleicher Farbe benachbart sind. Ein zweiter Typ T2 bzw. ein vierter Typ T4 von Grobfläche stellt eine Verbindungsfläche zwischen zwei Knotenflächen dar. Als Sonderfall sind für den Schwarzbereich S ein fünfter Typ T5 und für den Weißbereich W ein sechster Typ 6, vergl. Fig. 3, von Grobfläche vorgesehen, welche Typen T5, T6 an nur eine oder keine Knotenfläche gleicher Farbe angrenzen.

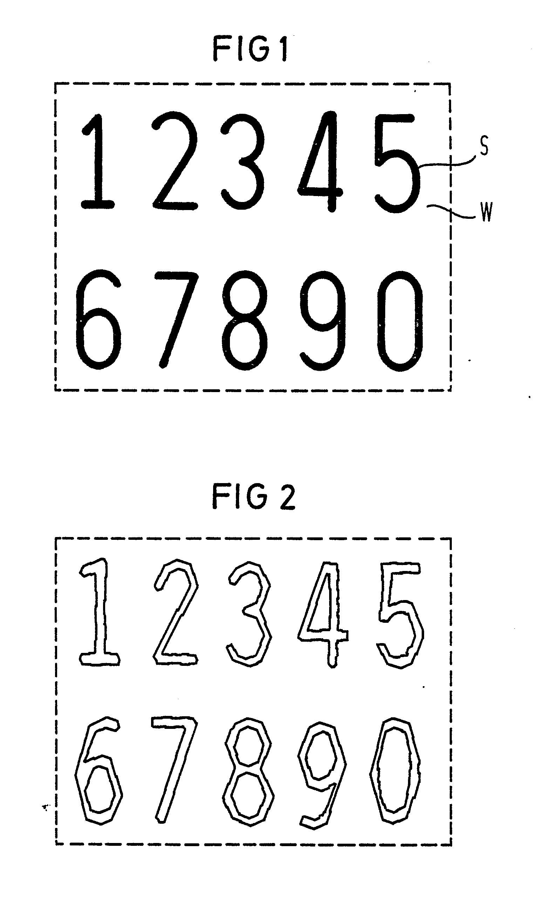

Das erfindungsgemäße Verfahren zum Erzeugen, Einpassen und symbolischen Repräsentieren von geometrischen Figuren in Schwarz-bzw. Weißbereichen synchron mit einem zeilenweisen Abtasten eines Schwarz/Weißbildes, dem symbolischen Repräsentieren dieser Figuren und dem Verzeigern dieser Repräsentanten mit Feinstrukturelementen der von den Figuren jeweils berührten Ränder sowie zum symbolischen Darstellen von Nachbarschaftsbeziehungen und flächenmäßigen Gegebenheiten in dem Schwarz/Weißbild, zur Bildung von Bildgraphen sieht vor, daß mit jedem neu entstehenden Feinstrukturelement FS der Ränder B sowohl für den angrenzenden Weißbereich W als auch für den angrenzenden Schwarzbereich S je ein symbolischer Repräsentant der geometrischen Figur Q gebildet wird. In jeden entstehenden symbolischen Repräsentanten wird ein Zeiger auf das den symbolischen Repräsentanten erzeugende Feinstrukturelement FS eingetragen. In jedes Feinstrukturelement FS wird je ein Zeiger auf die entstehenden symbolischen Repräsentanten des Weißbereichs W und des Schwarzbereichs S eingetragen. Neu entstandene symbolische Repräsentanten werden in eine Kette zur aktuellen Bearbeitung eingetragen. Die Kette, die eine Arbeitskette bildet, umfaßt diejenigen geometrischen Figuren Q, vergl. Q3 u. Q4 in Fig. 7, auf die im Verlaufe einer zeilenweisen Bearbeitung des Schwarz/Weiß-Bildes, vergl. Fig. 1, zugegriffen wird und/oder die im Verlaufe der zeilenweisen Bearbeitung eine schrittweise Veränderung erfahren. Anhand des neu entstandenen Feinstrukturelements werden eine Wachstumsrichtung der geometrischen Q und eine entsprechende Bewegungsrichtung der Kanten für die zu erzeugende geometrische Figur Q festgelegt.

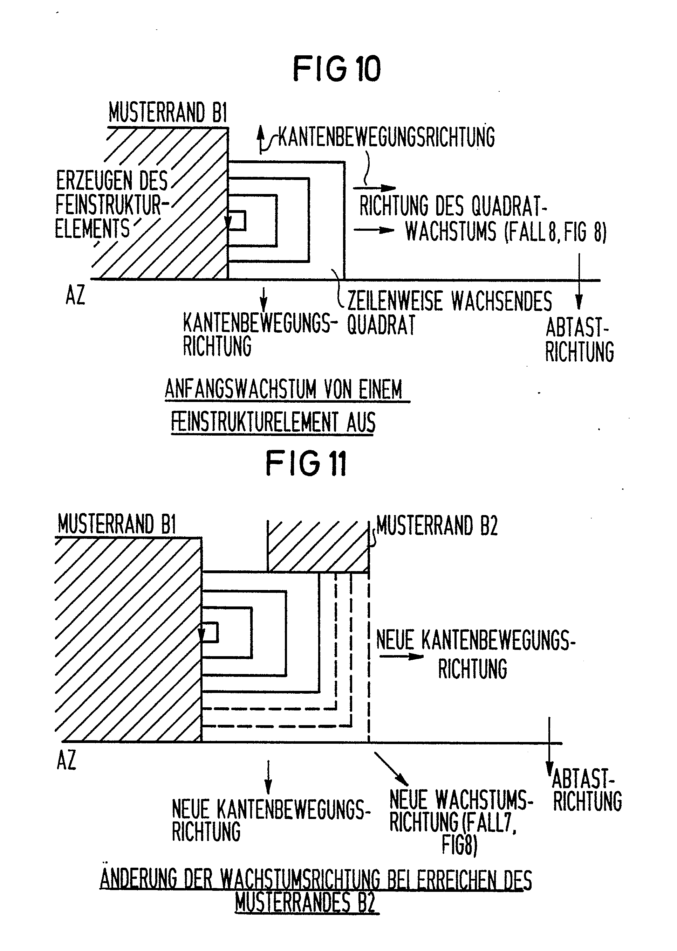

Für das erfindungsgemäße Verfahren ist vorzugsweise vorgesehen, daß die geometrische Figur Q ein Quadrat ist und daß für das Quadrat Q acht mögliche Wachstumsrichtungen (Fall 1 ... Fall 8 in Fig. 8) zusammen mit den zugehörigen Richtungen der Kantenbewegung definiert sind. Gemäß dem Typ des entstandenen Feinstrukturelements FS wird eine aus vier Anfangs-Wachstumsrichtungen (Fälle 2, 4, 6, 8 in Fig. 8) festgelegt. Während des Wachsens erfolgt bei Berühren eines benachbarten Randes durch eine der Quadratkanten die Bestimmung der Wachstumsrichtung neu, vergl. Fig. 11. Die Wachstumsrichtungen werden in solche Fälle unterteilt, in denen ein Kantenwachstum in Richtung des Abtastvorgangs erfolgt, und in solche Fälle, in denen kein Kantenwachstum in Richtung des Abtastvorgangs erfolgt, vergl. Fig. 8 u. Fig. 9. In dem Fall, in dem kein Kantenwachstum in Abtastrichtung erfolgt, wird das Quadrat Q ausgehend von einem Feinstrukturelement FS einzig und allein aus der Projektionszeile PZA der Abstände von der Abtastzeile, vergl. Fig. 12b, heraus berechnet. Diese Berechnung wird bereits zum Zeitpunkt des Entstehens des Feinstrukturelements FS vollständig durchgeführt. In dem Fall, in dem ein Kantenwachstum in Abtastrichtung erfolgt, wird der Wachstumsprozeß schrittweise im Takt des Abtastvorgangs durchgeführt, und hierzu wird ebenfalls zur Berechnung des Quadrats Q die Projektionszeile PZA der Abstände herangezogen, vergl. Fig. 12b. Nach jeder neuen Abtastzeile wird jedes in der Arbeitskette vorhandene Quadrat Q anhand der Projektionszeile PZA der Abstände aktualisiert und dahingehend überprüft, ob es in seine Umgebung, nämlich die benachbarten Ränder, eingepaßt ist. In dem Fall, in dem das Wachstum des Quadrats Q beendet ist, werden die entsprechenden Attribute, wie Angaben über die Kantenlänge und die Eckkoordinaten, in den symbolischen Repräsentanten des Quadrats Q eingetragen. Die Indizes der das Quadrat Q berührenden Feinstrukturelemente FS werden aus einer Projektionszeile PZI der Feinstrukturindizes entnommen, vergl. Fig. 12c. Anhand dieser Indizes wird der symbolische Repräsentant des Quadrats Q mit den Feinstrukturelementen FS der berührenden Ränder verzeigert, vergl. Fig. 12d, und in dieser Form in den Bildgraph eingebaut. Anhand der Quadrat-Attribute werden zusätzliche deckungsgleiche Quadrate ermittelt und nach deren Ermittlung eliminiert. Ein derart abgehandeltes Quadrat Q wird schließlich aus der Kette der aktuellen Bearbeitung entnommen. Fertige Quadrate Q werden daraufhin geprüft, ob sie in einer der Kantenrichtungen noch verschoben werden können. Im Falle einer möglichen Verschiebung werden die betreffenden spaltenweise bzw. zeilenweise verschobenen Quadrate Q berechnet, und es werden bei jedem Schritt der Abtastzeile AZ, vergl. Fig. 7, Fig. 10 u. Fig. 11, alle Projektionszeilen PZA, PZI aktualisiert.

Für das erfindungsgemäße Verfahren kann auch vorgesehen sein, daß die geometrische Figur ein Sechseck, ein Achteck oder ein Kreis ist. Die Wahl der Art der geometrischen Figur richtet sich nach deren Zweckmäßigkeit für bestimmte Anwendungsfälle.

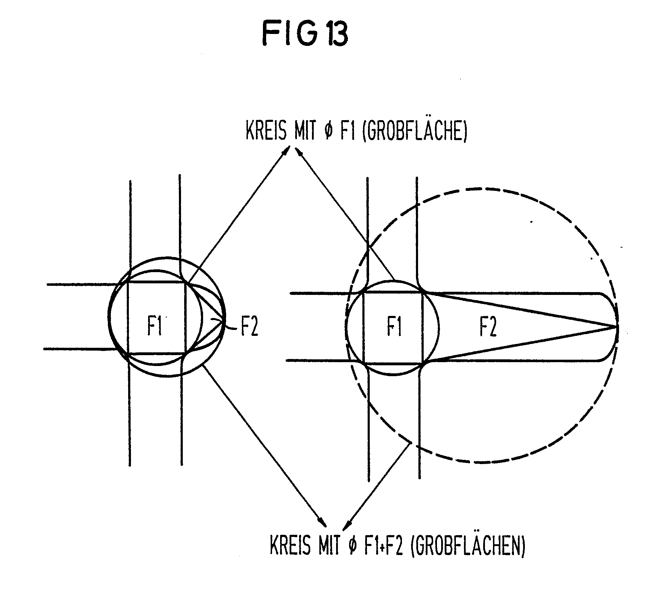

Für das erfindungsgemäße Verfahren ist im übrigen vorgesehen, daß die Grobflächen F durch die Funktionen "Erzeugen" und "Zusammenfassen" zeilenweise aus den geometrischen Figuren gebildet werden, wobei Grobflächen bei jedem Auftreten einer geometrischen Figur entstehen. Die Berührverweise der betreffenden geometrischen Figur werden auf die Grobfläche übertragen und von deren symbolischem Repräsentanten in einer Kette K gespeichert, vergl. Fig. 6. Grobflächen vom ersten Typ T1 bzw. vom dritten Typ T3 liegen vor, wenn sie mindestens drei Randberührpunkte aufweisen, vergl. Fig. 3. Grobflächen von zweiten Typ T2 bzw. vom vierten Typ T4 oder vom fünften Typ T5 bzw. vom sechsten Typ T6 liegen vor, wenn sie weniger als drei Randberührpunkte aufweisen, vergl. ebenfalls Fig. 3. Benachbarte Grobflächen vom zweiten bzw. vierten Typ T2 bzw. T4 oder vom fünften bzw. sechsten Typ T5 bzw. T6 werden grundsätzlich zusammengefaßt. Benachbarte Grobflächen vom ersten bzw. dritten Typ T1 bzw. T3 werden dann zusammengefaßt werden, wenn deren Abstand von der betreffenden Abtastzeile relativ zu dem Flächendurchmesser eines um die betreffende Grobfläche geschlagenen Kreises ein vorgegebenes Verhältnis V1 übersteigt. Grobflächen F1 vom ersten bzw. dritten Typ T1 bzw. T3 werden mit benachbarten Grobflächen F2 vom fünften bzw. sechsten Typ T5 bzw. T6 dann zusammengefaßt, wenn ein Verhältnis V2 das vorgegebene Verhältnis V1 nicht übersteigt, wobei das Verhältnis V2 gleich dem Verhältnis "maximaler Durchmesser (F1 + F2) - maximaler Durchmesser (F1)" zu "maximaler Durchmesser (F1)" ist, vergl. Fig. 13. Derart neu gebildete Grobflächen sind wiederum vom ersten bzw. dritten Typ T1 bzw. T3 oder vom zweiten bzw. vierten Typ T2 bzw. T4 oder vom fünften bzw. sechsten Typ T5 bzw. T6. Sie werden - wenn Bedingungen betreffend die Verhältnisse V1 und/oder V2 erfüllt sind - wiederum zur Bildung neuer Grobflächen herangezogen.

Das Verhältnis V1 wird vorzugsweise experimentell bestimmt, da dessen optimale Bestimmung von der Art der zu bearbeitenden Schwarz/Weiß-Bilder abhängt.

Schließlich ist für das erfindungsgemäße Verfahren vorgesehen, daß die Projektionszeile PZA für die Abstände aus einem Zählerfeld besteht, vergl. Fig. 12b, wobei die Anzahl der Zähler der Anzahl der Bildspalten entspricht und wobei der jeweilige Stand jedes der Zähler dem Abstand zwischen der Abtastzeile AZ und dem unmittelbar über der Abtastzeile AZ liegenden Musterrand in dieser Bildspalte entspricht. Diese Zählstände werden mit jeder neuen Abtastzeile AZ aktualisiert. Darüber hinaus ist erfindungsgemäß vorgesehen, daß die Projektionszeile PZI für die Indizes der Feinstrukturelemente FS, vergl. Fig. 12c, einem Speicherfeld entspricht, wobei jeder Bildspalte ein Speicherelement zugeordnet ist, und daß in jedes Bildspalte ein Speicherelement der Speicherindex des Feinstrukturelements FS eingetragen ist, das entlang der Bildspalte unmittelbar über der Abtastzeile AZ liegt, vergl. Fig. 12d.

## Ansprüche

1. Bildgraph zur symbolischen Darstellung von Schwarz/Weiß-Bildern, mit
-Feinstrukturketten, bestehend aus Feinstrukturelementen und deren Verkettung gemäß dem Randverlauf des betreffenden Musters zum Zwecke einer exakten Musterbeschreibung in einer ersten Beschreibungsebene,
-Deskriptorketten, bestehend aus Deskriptoren und deren Verkettung gemäß dem Randverlauf des betreffenden Musters zum Zwecke einer vergröberten Musterbeschreibung in einer zweiten Beschreibungsebene,
-Angaben über Beziehungen zwischen diesen beiden Beschreibungsebenen und
-Repräsentanten für Außen-und Innenränder, Objekte und Worte sowie deren Beziehungen untereinander,
dadurch **gekennzeichnet,** daß
-in der ersten Beschreibungsebene jedes Feinstrukturelement (FS; Fig. 7 u. Fig. 12d) mit lokal benachbarten Feinstrukturelementen (FS) desselben Randes bzw. anderer Ränder über eine Flächenbeziehung verbunden ist,
-diese Flächenbeziehung gemäß den Eigenschaften einer zwischen den betreffenden Rändern (B1, B2, B3; Fig. 7) eingepaßten geometrischen Figur (Q) dargestellt ist, - diese Flächenbeziehung durch einen symbolischen Repräsentanten in Form einer Datenstruktur repräsentiert ist,

-diese Datenstruktur durch Zeiger mit all den Feinstrukturelementen (FS; Fig. 7 u. Fig. 12d) verbunden ist, die die geometrische Figur an den angrenzenden Rändern berühren,

-diese geometrische Figur (Q) sowohl in Weißbereichen (W) als auch in Schwarzbereichen (S) extrahiert sind,

-von jedem Feinstrukturelement (FS) je ein Zeiger auf den symbolischen Repräsentanten der berührenden geometrischen Figur (Q) des Weißbereichs (W) und des Schwarzbereichs (S) eingetragen ist,

-die Repräsentanten benachbarter geometrischer Figuren (Q) in dem Schwarzbereich (S) bzw. in dem Weißbereich (W) derart untereinander verzeigert sind, daß sich ein Musterskelett des Weißbereichs (W) bzw. des Schwarzbereichs (S) in vektorisierter Form ergibt,

-in der zweiten Beschreibungsebene jeder Deskriptor (D) mit lokal benachbarten Deskriptoren (D) desselben Randes (B) bzw. anderer Ränder (B) über eine entsprechende Grobfläche (F; Fig. 3 u. Fig. 4) verbunden ist,

-diese Grobfläche (F) gemäß den Eigenschaften eines von einem Betrachter als ganzheitlich empfundenen Bereichs dargestellt ist,

-diese Grobfläche (F) durch einen symbolischen Repräsentanten in Form einer Datenstruktur repräsentiert ist,

-diese Datenstruktur durch Zeiger (Z) mit all den Deskriptoren (D) der angrenzenden Ränder verbunden ist, die den von dem Betrachter empfundenen Bereich berühren (Fig. 4, Fig. 6),

- diese Grobflächen (F) sowohl in Weißbereichen (W) als auch in Schwarzbereichen (S) extrahiert sind,

-von jedem Deskriptor (D) ein Rückzeiger (ZDR; Fig. 6) auf den Repräsentanten der berührenden Grobfläche (F) sowohl des angrenzenden Weißbereichs (W) als auch des angrenzenden Schwarzbereichs (S) eingetragen ist,

-die Repräsentanten benachbarter Grobflächen (F) in dem Schwarzbereich (S) bzw. in dem Weißbereich (W) untereinander durch Zeiger (ZF; Fig. 6) verzeigert sind und

-sich daraus ein Grobskelett des Weißbereichs (W) bzw. des Schwarzbereichs (S) ergibt.

2. Bildgraph nach Anspruch 1, dadurch **gekennzeichnet,**

-daß im Regelfall vier Typen (T1 ... T4; Fig. 3) von Grobflächen vorgesehen sind, wobei dem Schwarzbereich und dem Weißbereich jeweils zwei Grundtypen zugeordnet sind,

-daß ein erster Typ (T1) bzw. ein dritter Typ (T3) von Grobfläche eine schwarze bzw. eine weiße Knotenfläche darstellt, der zumindest drei Flächen gleicher Farbe benachbart sind,

-daß ein zweiter Typ (T2) bzw. ein vierter Typ (T4) von Grobfläche eine Verbindungsfläche zwischen zwei Knotenflächen darstellt und

-daß als Sonderfall für den Schwarzbereich (S) ein fünfter Typ (T5) und für den Weißbereich (W) ein sechster Typ (T6; Fig. 3) von Grobfläche vorgesehen sind, welche Typen (T5, T6) an nur eine oder keine Knotenfläche gleicher Farbe angrenzen.

3. Verfahren zum Erzeugen, Einpassen und symbolischen Repräsentieren von geometrischen Figuren in Schwarz-bzw. Weißbereichen synchron mit einem zeilenweisen Abtasten eines Schwarz/Weißbildes, dem symbolischen Repräsentieren dieser Figuren und dem Verzeigern dieser Repräsentanten mit Feinstrukturelementen der von den Figuren jeweils berührten Ränder und dadurch zum symbolischen Darstellen von Nachbarschaftsbeziehungen und flächenmäßigen Gegebenheiten in dem Schwarz/Weißbild, zur Bildung von Bildgraphen nach Anspruch 1 oder 2, dadurch **gekennzeichnet,**daß

-mit jedem neu entstehenden Feinstrukturelement (FS) der Ränder (B) sowohl für den angrenzenden Weißbereich (W) als auch für den angrenzenden Schwarzbereich (S) je ein symbolische Repräsentant der geometrischen Figur (Q) gebildet wird,

-in jeden entstehenden symbolischen Repräsentanten ein Zeiger auf das den symbolischen Repräsentanten erzeugende Feinstrukturelement (FS) eingetragen wird,

-in jedes Feinstrukturelement (FS) je ein Zeiger auf die entstehenden symbolischen Repräsentanten des Weißbereichs (W) und des Schwarzbereichs (S) eingetragen wird,

-neu entstandene symbolische Repräsentanten in eine Kette zur aktuellen Bearbeitung eingetragen werden,

-die Kette, die eine Arbeitskette bildet, diejenigen geometrischen Figuren (Q) umfaßt, auf die im Verlaufe einer zeilenweisen Bearbeitung des Schwarz/Weiß-Bildes (Fig. 1) zugegriffen wird und/oder die im Verlaufe der zeilenweisen Bearbeitung eine schrittweise Veränderung erfahren und

-anhand des neu entstandenen Feinstrukturelements eine Wachstumsrichtung der geometrischen Figur (Q) und eine entsprechende Bewegungsrichtung der Kanten für die zu erzeugende geometrische Figur (Q) festgelegt werden.

4. Verfahren nach Anspruch 3, dadurch **gekennzeichnet,** daß die geometrische Figur ein Quadrat ist und daß

-für das Quadrat (Q) acht mögliche Wachstumsrichtungen (Fall 1 ... Fall 8; Fig. 8) zusammen mit den zugehörigen Richtungen der Kantenbewegung definiert sind,

-gemäß dem Typ des entstandenen Feinstrukturelements (FS) eine aus vier Anfangs-Wachstumsrichtungen (Fälle 2, 4, 6, 8; Fig. 8) festgelegt wird,

-während des Wachsens bei Berühren eines benachbarten Randes durch eine der Quadratkanten die Bestimmung der Wachstumsrichtung neu erfolgt Fig. 11),

-die Wachstumsrichtungen in solche Fälle unterteilt werden, in denen ein Kantenwachstum in Richtung des Abtastvorgangs erfolgt, und in solche Fälle, in denen kein Kantenwachstum in Richtung des Abtastvorgangs erfolgt (Fig. 8, Fig. 9)

-in dem Fall, in dem kein Kantenwachstum in Abtastrichtung erfolgt, das Quadrat (Q) ausgehend von einem Feinstrukturelement (FS) einzig und allein aus der Projektionszeile (PZA) der Abstände von der Abtastzeile (Fig. 12b) heraus berechnet wird und diese Berechnung bereits zum Zeitpunkt des Entstehens des Feinstrukturelements (FS) vollständig durchgeführt wird,

-in dem Fall, in dem ein Kantenwachstum in Abtastrichtung erfolgt, der Wachstumsprozeß schrittweise im Takt des Abtastvorgangs durchgeführt wird und hierzu ebenfalls zur Berechnung des Quadrats (Q) die Projektionszeile (PZA) der Abstände herangezogen wird (Fig. 12b),

-nach jeder neuen Abtastzeile jedes in der Arbeitskette vorhandene Quadrat (Q) anhand der Projektionszeile (PZA) der Abstände aktualisiert und dahingehend überprüft wird, ob es in seine Umgebung, nämlich die benachbarten Ränder, eingepaßt ist,

-in dem Fall, in dem das Wachstum des Quadrats (Q) beendet ist, die entsprechenden Attribute, wie Angaben über die Kantenlänge und die Eckkoordinaten, in den symbolischen Repräsentanten des Quadrats (Q) eingetragen werden,

-die Indizes der das Quadrat (Q) berührenden Feinstrukturelemente (FS) aus einer Projektionszeile (PZI) der Feinstrukturindizes entnommen werden (Fig. 12c),

-anhand dieser Indizes der symbolische Repräsentant des Quadrats (Q) mit den Feinstrukturelementen (FS) der berührenden Ränder verzeigert wird (Fig. 12d) und in dieser Form in den Bildgraph eingebaut wird,

-anhand der Quadrat-Attribute zusätzliche deckungsgleiche Quadrate ermittelt und nach deren Ermittlung eliminiert werden,

-ein derart abgehandeltes Quadrat (Q) aus der Kette der aktuellen Bearbeitung entnommen wird,

-fertige Quadrate (Q) daraufhin, geprüft werden, ob sie in einer der Kantenrichtungen noch verschoben werden können,

-im Falle einer möglichen Verschiebung die betreffenden spaltenweise bzw. zeilenweise verschobenen Quadrate (Q) berechnet werden und

-bei jedem Schritt der Abtastzeile (AZ; Fig. 7, Fig. 10, Fig. 11) alle Projektionszeilen (PZA, PZI) aktualisiert werden.

5. Verfahren nach Anspruch 3, dadurch **gekennzeichnet,** daß die geometrische Figur ein Sechseck ist.

6. Verfahren nach Anspruch 3, dadurch **gekennzeichnet,** daß die geometrische Figur ein Achteck ist.

7. Verfahren nach Anspruch 3, dadurch **gekennzeichnet,** daß die geometrische Figur ein Kreis ist.

8. Verfahren nach einem der Ansprüche 3 bis 7, dadurch **gekennzeichnet,** daß

-die Grobflächen (F) durch die Funktionen "Erzeugen" und "Zusammenfassen" zeilenweise aus den geometrischen Figuren gebildet werden, wobei Grobflächen bei jedem Auftreten einer geometrischen Figur entstehen,

-die Berührverweise der betreffenden geometrischen Figur auf die Grobfläche übertragen und von deren symbolischem Repräsentanten in einer Kette (K) gespeichert werden (Fig. 6),

-Grobflächen vom ersten Typ (T1) bzw. vom dritten Typ (T3) vorliegen, wenn sie mindestens drei Randberührpunkte aufweisen (Fig. 3),

-Grobflächen vom zweiten Typ (T2) bzw. vom vierten Typ (T4) oder vom fünften Typ (T5) bzw. vom sechsten Typ (T6) vorliegen, wenn sie weniger als drei Randberührpunkte aufweisen (Fig. 3),

-benachbarte Grobflächen vom zweiten bzw. vierten Typ (T2 bzw. T4) oder vom fünften bzw. sechsten Typ (T5 bzw. T6) grundsätzlich zusammengefaßt werden,

-benachbarte Grobflächen vom ersten bzw. dritten Typ (T1 bzw. T3) dann zusammengefaßt werden, wenn deren Abstand von der betreffenden Abtastzeile relativ zu dem Flächendurchmesser eines um die betreffende Grobfläche geschlagenen Kreises ein vorgegebenes Verhältnis V1 übersteigt,

-Grobflächen (F1) vom ersten bzw. dritten Typ (T1 bzw. T3) mit benachbarten Grobflächen (F2) vom fünften bzw. sechsten Typ (T5 bzw. T6) dann zusammengefaßt werden, wenn ein Verhältnis V2 das vorgegebene Verhältnis V1 nicht übersteigt, wobei das Verhältnis V2 gleich dem Verhältnis "maximaler Durchmesser (F1 + F2) - maximaler Durchmesser (F1)" zu "maximaler Durchmesser (F1)" ist (Fig. 13) und

-derart neu gebildete Grobflächen wiederum vom ersten bzw. dritten Typ (T1 bzw. T3) oder vom zweiten bzw. vierten Typ (T2 bzw. T4) oder vom fünften bzw. sechsten Typ (T5 bzw. T6) sind und - wenn Bedingungen betreffend die Verhältnisse V1 und/oder V2 erfüllt sind - wiederum zur Bildung neuer Grobflächen herangezogen werden.

9. Verfahren nach Anspruch 8, dadurch **gekennzeichnet,** daß das Verhältnis V1 experimentell bestimmt ist.

10. Verfahren nach einem der Ansprüche 3 bis 9, dadurch **gekennzeichnet,** daß
-die Projektionszeile (PZA) für die Abstände aus einem Zählerfeld (Fig. 12b) besteht, wobei die Anzahl der Zähler der Anzahl der Bildspalten entspricht und wobei der jeweilige Stand jedes der Zähler dem Abstand zwischen der Abtastzeile (AZ) und dem unmittelbar über der Abtastzeile (AZ) liegenden Musterrand in dieser Bildspalte entspricht,
-diese Zählstände mit jeder neuen Abtastzeile (AZ) aktualisiert werden,
-die Projektionszeile (PZI) für die Indizes (Fig. 12c) der Feinstrukturelemente (FS) einem Speicherfeld entspricht, wobei jeder Bildspalte ein Speicherelement zugeordnet ist, und
-in jedes Speicherelement der Speicherindex des Feinstrukturelements (FS) eingetragen ist, das entlang der Bildspalte unmittelbar über der Abtastzeile (AZ) liegt Fig. 12d).

## FIG 1

1 2 3 4 5 — S
— W
6 7 8 9 0

## FIG 2

1 2 3 4 5
6 7 8 9 0

# FIG 3

T = Typ der Grobfläche
ST = Graustufe

# FIG4

FIG 5

FIG 6

# FIG 7

B1  S  B2

S

Q1

S

B3  S

Q3

Q2

Q4

AZ

ABTASTRICHTUNG

# FIG 9

2

3  1

3 WACHSTUMSRICHTUNGEN
OHNE KANTENWACHSTUM
IN ABTASTRICHTUNG

4  8

5 WACHSTUMSRICHTUNGEN
MIT KANTENWACHSTUM
IN ABTASTRICHTUNG

5  7

ABTASTRICHTUNG  6

# FIG 8

OHNE KANTENWACHSTUM
IN ABTASTRICHTUNG

| WACHTUMSRICHTUNG DES QUADRATS | BEWEGUNGSRICHTUNG DER QUADRATKANTEN | FALL-NR. | ANFANGS-WACHSTUMS-RICHTUNGEN |
|---|---|---|---|
| | | 1 | |
| | | 2 | X |
| | | 3 | |
| | | 4 | X |
| | | 5 | |
| | | 6 | X |
| | | 7 | |
| | | 8 | X |

MIT KANTENWACHSTUM
IN ABTASTRICHTUNG

# FIG 10

MUSTERRAND B1

KANTENBEWEGUNGSRICHTUNG

ERZEUGEN DES
FEINSTRUKTUR-
ELEMENTS

RICHTUNG DES QUADRAT-
WACHSTUMS (FALL 8, FIG 8)

AZ

KANTENBEWEGUNGS-
RICHTUNG

ZEILENWEISE WACHSENDES
QUADRAT

ABTAST-
RICHTUNG

ANFANGSWACHSTUM VON EINEM
FEINSTRUKTURELEMENT AUS

# FIG 11

MUSTERRAND B1

MUSTERRAND B2

NEUE KANTENBEWEGUNGS-
RICHTUNG

AZ

NEUE KANTENBEWEGUNGS-
RICHTUNG

NEUE WACHSTUMS-
RICHTUNG (FALL 7,
FIG 8)

ABTAST-
RICHTUNG

ÄNDERUNG DER WACHSTUMSRICHTUNG BEI ERREICHEN DES
MUSTERRANDES B2

FIG 12

BILDMUSTER

# FIG 13

KREIS MIT ⌀ F1 (GROBFLÄCHE)

KREIS MIT ⌀ F1+F2 (GROBFLÄCHEN)